# FASCICULE DE BREVET EUROPEEN

(11) **EP 3 926 784 B1**
(45) Date de publication et mention de la délivrance du brevet: **19.04.2023**
(21) Numéro de dépôt: 21180400.0
(22) Date de dépôt: 18.06.2021
(51) Int. Cl.: H02J 5/00, H02M 7/797, H02M 7/5387

(54) **PROCÉDÉ DE COMMANDE D'UN ONDULEUR RÉVERSIBLE CONTRÔLÉ EN DROOP**
VERFAHREN ZUR STEUERUNG EINES DROOP-MODE-GESTEUERTEN REVERSIBLEN WECHSELRICHTERS
METHOD FOR CONTROLLING A REVERSIBLE DROOP-CONTROLLED INVERTER

(30) Priorité: 19.06.2020 FR 2006406
(43) Date de publication de la demande: 22.12.2021
(73) Titulaire: SNCF RESEAU, 93418 La Plaine Saint-Denis Cedex (FR)
(72) Inventeur: LETROUVE, Tony, 59113 SECLIN (FR); CARON, Hervé, 60290 CAMBRONNE (FR); ALMAKSOUR, Khaled, 59650 VILLENEUVE D'ASCQ (FR); ROBYNS, Benoit, 59130 LAMBERSART (FR); NAVARRO, Nicolas, 59308 VALENCIENNES Cedex (FR)
(74) Mandataire: IPAZ

(56) Documents cités:
- EP-A1- 1 985 490
- CN-A- 110 053 521
- CN-B- 106 364 335

## Description

### Domaine technique

La présente invention concerne un procédé et un dispositif de commande d'un onduleur réversible, contrôlé en droop, associé à une sous-section de voie ferrée. Elle concerne également un onduleur réversible équipé d'un tel dispositif.

Le domaine de l'invention est le domaine ferroviaire, et plus particulièrement le domaine des dispositifs de conversion d'énergie réversibles contrôlés en tension de droop utilisés au niveau d'une sous-station alimentant des caténaires pour véhicules ferroviaires.

### Etat de la technique antérieure

Les documents EP1985490A1 et CN110053521A décrivent des systèmes de récupération d'énergie dans le domaine ferroviaire. Récupérer de l'énergie de freinage provenant des véhicules ferroviaires, pour la renvoyer au réseau électrique (ou alimenter des charges en courant alternatif AC) nécessite l'installation d'un onduleur réversible à transistor bipolaire à grille isolée (de l'anglais Insulated Gate Bipolar Transistor (IGBT)) dans une sous-station de puissance. L'onduleur réversible à IGBT a la possibilité de contrôler une puissance active et une puissance réactive séparément, ce qui lui permet d'avoir différents modes de fonctionnement distincts notamment :
- un premier mode dans lequel l'onduleur réversible est capable de récupérer de l'énergie de freinage et la convertir en tension alternative, et
- un second mode dans lequel l'onduleur réversible est capable de récupérer une tension alternative et de la convertir en tension continue.
Dans le cas des véhicules ferroviaires, ces onduleurs réversibles à IGBT sont contrôlés par un contrôleur qui agit sur une puissance active de l'onduleur.

Les contrôleurs d'onduleur réversible à IGBT se basent sur une stratégie de droop en tension continue DC nécessitant un seuil de déclenchement prédéfini. Dépassant ce seuil de tension prédéfini, le contrôleur de l'onduleur réversible modifie la consigne de la puissance active de l'onduleur permettant ainsi une conversion de l'énergie de freinage en énergie alternative. Dans le cas d'un onduleur réversible positionné dans une sous-station servant à l'alimentation de caténaires, ce seuil de déclenchement est prédéfini et fixé par rapport à une tension de référence, étant dans le cas considéré, la tension continue DC à vide de la sous-station. Les contrôleurs d'onduleur réversible fonctionnant en droop de tension sont fonctionnels mais posent différents problèmes notamment :
- de pertes de récupération d'énergie de freinage si le seuil de déclenchement est trop élevé par rapport à la tension de référence,
- de courant parasite, dit courant de boucle, circulant dans le circuit électrique, notamment entre l'onduleur et un circuit de redressement de la sous-station, si ce seuil de déclenchement est inférieur à la tension continue DC à vide, et
- de facilité de modulation du seuil de déclenchement.

Un but de l'invention est de remédier à au moins un de ces inconvénients précités.

Un autre but de l'invention est de proposer un procédé et un dispositif de commande d'un onduleur réversible, contrôlé en droop de tension, plus flexible et plus adaptable.

Un autre but de l'invention est de proposer un procédé et un dispositif de commande d'un onduleur réversible, contrôlé en droop, permettant de diminuer la perte de récupération d'énergie de freinage par l'onduleur.

Un autre but de l'invention est de proposer un procédé et un dispositif de commande d'un onduleur réversible, contrôlé en droop, limitant et empêchant la circulation de courant de boucle entre l'onduleur et le circuit de redressement de la sous-station.

### Exposé de l'invention

L'invention permet d'atteindre au moins un des buts précités par un procédé de commande d'un onduleur réversible, contrôlé en droop, associé à une sous-station alimentant une section de voie ferrée, ledit onduleur réversible étant utilisé pour une récupération d'énergie au freinage au sein de ladite section, déclenchée au-delà d'une tension, dite tension de seuil, bornée par une tension minimale et une tension maximale définies par rapport à ladite tension de seuil. Le procédé selon l'invention comprend au moins une itération d'une phase d'ajustement de ladite tension seuil dudit onduleur et comprenant les étapes suivantes :
- mesure d'un courant fourni par ladite sous-station à ladite section de voie ferrée ;
- mesure d'une tension continue fournie par la sous-station à ladite section de voie ferrée ;
- attribution de la valeur mesurée de ladite tension continue à ladite tension seuil lorsque :
   - le courant mesuré est strictement inférieur à une valeur de courant prédéfinie pour ladite sous-station, appelée courant de seuil, et correspondant à une tension à vide de ladite sous-station, et
   - ladite tension continue est strictement supérieure au seuil minimal.

Le procédé selon l'invention propose ainsi un procédé de commande d'un onduleur réversible dans lequel le seuil de déclenchement, appelé seuil de droop, est modulable et s'adapte aux variations de la tension continue DC à vide de la sous-station. Le procédé selon l'invention est donc simple à mettre en oeuvre et peu onéreux car il se monte facilement dans les sous-stations.

De cette manière, le procédé selon l'invention diminue les pertes d'énergie de freinage vers l'onduleur améliorant ainsi la conversion d'énergie de freinage en énergie alternative. Le procédé selon l'invention permet ainsi de réaliser des économie d'énergie en améliorant son recyclage.

En outre, le procédé selon l'invention limite l'apparition d'un courant de boucle présent dans le circuit, notamment entre l'onduleur et un montage redresseur de la sous-station, ce qui limite l'endommagement précoce des éléments du circuit électrique. Le procédé selon l'invention permet ainsi d'améliorer le temps de vie des composants, ce qui permet à long terme de réaliser des économies.

Le procédé selon l'invention peut comprendre une étape d'initialisation dans laquelle la tension de seuil est définie égale à la tension maximale.

Cette étape permet, au début du procédé, d'éviter l'apparition d'un courant de boucle si la tension de seuil est trop faible par rapport à la tension à vide de la sous-station.

De plus, lors d'une nouvelle itération, la valeur de la tension maximale (V₀ₘₐₓ) utilisée lors de l'étape d'initialisation peut être choisie comme étant la valeur de la tension maximale (V₀ₘₐₓ) obtenue lors de la précédente itération, ladite valeur de tension maximale étant recalculée lors de la précédente itération en fonction de la valeur de la tension seuil (V₀) obtenue à l'étape d'attribution.

De cette manière, le procédé selon l'invention utilise la tension de seuil précédemment ajustée, ce qui lui permet de limiter la perte d'énergie de freinage lors du passage à l'itération suivante, tout en limitant le courant de boucle. Le procédé selon l'invention maximise ainsi le taux de conversion d'énergie de freinage en énergie alternative pour alimenter le réseau haute tension.

De préférence, dans une variante de procédé selon l'invention, lors d'une nouvelle itération, la valeur de la tension maximale utilisée lors de l'étape d'initialisation peut être choisie comme étant la valeur de la tension maximale utilisée lors de l'étape d'initialisation de la première itération.

De cette manière, à chaque étape d'initialisation de la phase d'ajustement du procédé selon l'invention, la tension de seuil (V₀) est assimilée à la valeur de tension maximale à vide de la sous-station qui est utilisée au début du procédé selon l'invention. Le procédé selon l'invention est donc plus robuste car il évite, à chaque nouvelle itération, l'apparition d'un courant de boucle si la tension de seuil est trop faible par rapport à la tension à vide de la sous-station.

Le procédé selon l'invention peut comprendre, avant la première itération de la phase d'ajustement, :
- une étape de mesure, pendant une durée prédéterminée, d'une tension continue DC (V₁) à vide fournie par la sous-station à ladite section de voie ferrée, et
- une étape de mesure, pendant une durée prédéterminée, d'un courant continu (I₁) à vide fourni par ladite sous-station à ladite section de voie ferrée.

Par exemple, la durée prédéterminée peut être comprise entre un jour et un mois, de préférences plusieurs jours, encore plus préférentiellement une semaine.

Cette mesure permet au procédé selon l'invention de choisir un intervalle de la variation de la tension de seuil (V₀). Par exemple, ces mesures permettent de mieux choisir la tension maximale (V₀ₘₐₓ) et la tension minimale (V₀ₘᵢₙ) de la sous-station et du courant de seuil (I₀) utilisés, par exemple, à la première itération du procédé selon l'invention.

Le procédé selon l'invention peut comprendre une étape de mesure d'une tension alternative AC à vide, de préférence pendant une certaine durée, fournie par le réseau électrique haute tension à ladite sous-station.

Le procédé selon l'invention peut comprendre une étape de conversion par l'onduleur des mesures de la tension alternative (AC) fournie par le réseau électrique haute tension en une tension continue (DC).

Cette mesure permet au procédé selon l'invention de connaître la valeur de la tension alternative (AC) à vide de la sous-station, ce qui permet de mieux choisir la tension maximale (V₀ₘₐₓ) et la tension minimale (V₀ₘᵢₙ) de la sous-station utilisée, par exemple, à la première itération du procédé selon l'invention.

Ainsi, le procédé selon l'invention s'adapte mieux aux variations de tension du réseau électrique haute tension, en choisissant par exemple, à l'étape d'initialisation une tension maximale plus proche de l'état réel du réseau électrique, au moment de la mise en oeuvre du procédé selon l'invention, limitant ainsi les pertes de conversion de l'énergie de freinage et le courant de boucle

Le procédé selon l'invention peut comprendre une étape préalable, réalisée avant la première itération de la phase d'ajustement, et lors de laquelle les valeurs de la tension minimale, de la tension maximale, et du courant de seuil, peuvent être définies.

Le procédé selon l'invention comprend ainsi une étape préalable avant de débuter le procédé de manière à fixer certaines grandeurs utiles à la réalisation dudit procédé pour la sous-station considérée.

Le procédé selon l'invention peut comprendre, après l'étape d'attribution, une étape de transmission de la valeur de la tension de seuil ajustée à l'étape d'attribution, à l'onduleur réversible.

Ainsi, suivant le procédé selon l'invention, la tension de seuil de déclenchement de récupération d'énergie est ajustée, en temps réel. Cela permet ainsi de maximiser la quantité d'énergie de freinage récupérée.

En outre, cela permet d'adapter rapidement le mode de fonctionnement de l'onduleur en cas, ou non, de freinage d'un ou plusieurs véhicules ferroviaires. Ainsi, dans le cas d'une énergie de freinage supérieure au seuil de tension choisi selon le procédé selon l'invention, l'onduleur fonctionnera en mode de conversion d'énergie de freinage en énergie alternative et dans le cas contraire, en mode conversion d'énergie alternative en énergie continue pour alimenter les caténaires de véhicules ferroviaires.

La phase d'ajustement peut être réitérée lorsque le courant de seuil est strictement inférieur au courant mesuré fourni par la sous-station.

La phase d'ajustement du procédé selon l'invention peut ainsi être réitérée, ce qui permet, par exemple, de mieux s'adapter aux changements intervenants dans la portion ferrée couverte par le procédé selon l'invention et d'ajuster au mieux la tension de seuil en fonction de ces changements.

Le procédé selon l'invention peut comprendre une étape de communication des données à un serveur distant par des moyens de communication.

Les moyens de communication peuvent comprendre un dispositif 3G sans fil.

Les données communiquées au serveur distant peuvent comprendre la tension continue mesurée et le courant mesuré fournis par la sous-station, et/ou la tension haute tension continue mesurée du réseau électrique, et/ou la tension de seuil ajustée envoyée à l'onduleur, et/ou des données relatives à l'itération et/ou à un état dudit procédé.

Les données ainsi communiquées peuvent être utilisées pour :
- suivre l'état de la consommation et/ou de la récupération d'énergie par l'onduleur, et/ou
- contrôler le fonctionnement du procédé selon l'invention.

Selon un autre aspect de l'invention, il est proposé un dispositif de commande d'un onduleur réversible, contrôlé en droop, associé à une sous-station alimentant une section de voie ferrée, ledit onduleur étant utilisé pour une récupération de l'énergie au freinage au sein de ladite section, déclenchée au-delà d'une tension, dite tension de seuil, bornée par une tension minimale et une tension maximale définies par rapport à ladite tension de seuil. Le dispositif selon l'invention comprend :
- un premier moyen de mesure agencé pour fournir une mesure du courant fourni par ladite section de voie ferrée,
- un second moyen de mesure agencé pour fournir une mesure de la tension continue fournie par la sous-station à ladite section de voie ferrée, et
- au moins un module de calcul ;
agencés pour mettre en oeuvre un procédé selon l'invention décrit précédemment.

Le dispositif selon l'invention comprend donc les moyens pour mettre en oeuvre une combinaison quelconque des étapes mises en oeuvre par le procédé selon l'invention, décrit précédemment.

Le dispositif selon l'invention peut comprendre en outre un troisième moyen de mesure agencé pour fournir une mesure de la tension continue du réseau électrique haute tension à ladite sous-station.

Le dispositif selon l'invention peut comprendre au moins des moyens de communication agencés pour communiquer des données avec un serveur distant.

Les moyens de communications peuvent comprendre un dispositif 3G sans fil.

Le dispositif de commande d'un onduleur réversible peut comprendre des moyens de communication agencés pour connecter ledit dispositif à un bus de type Controller Area Network (CAN) et/ou à des dispositifs ayant des entrées et/ou sorties analogiques et numériques.

Le dispositif peut comprendre un moyen d'affichage de données agencé pour qu'un utilisateur suive en temps réel le fonctionnement dudit dispositif.

Le dispositif selon l'invention peut comprendre en outre au moins un port de connexion agencé pour connecter ledit dispositif avec au moins un contrôleur d'onduleur réversible fonctionnant en droop.

Selon un autre aspect de l'invention, il est proposé un onduleur réversible, contrôlé en droop, comprenant au moins un dispositif selon l'invention.

### Brève description des dessins

D'autres avantages et caractéristiques apparaîtront à l'examen de la description détaillée d'exemples nullement limitatifs, et des dessins annexés sur lesquels :
[Fig. 1] la FIGURE 1 est une représentation schématique non limitative du déroulement du procédé selon l'invention,
[Fig. 2] la FIGURE 2 est une représentation schématique non limitative d'une caractéristique de droop d'un onduleur réversible à IGBT selon l'état de l'art,
[Fig. 3] la FIGURE 3 est une représentation schématique non limitative d'une caractéristique de droop d'un onduleur réversible à IGBT commandé par le procédé selon l'invention, et
[Fig. 4] la FIGURE 4 est une représentation schématique non limitative d'un dispositif de commande selon l'invention relié à une sous-section de voie ferrée.

### Description détaillée des figures

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

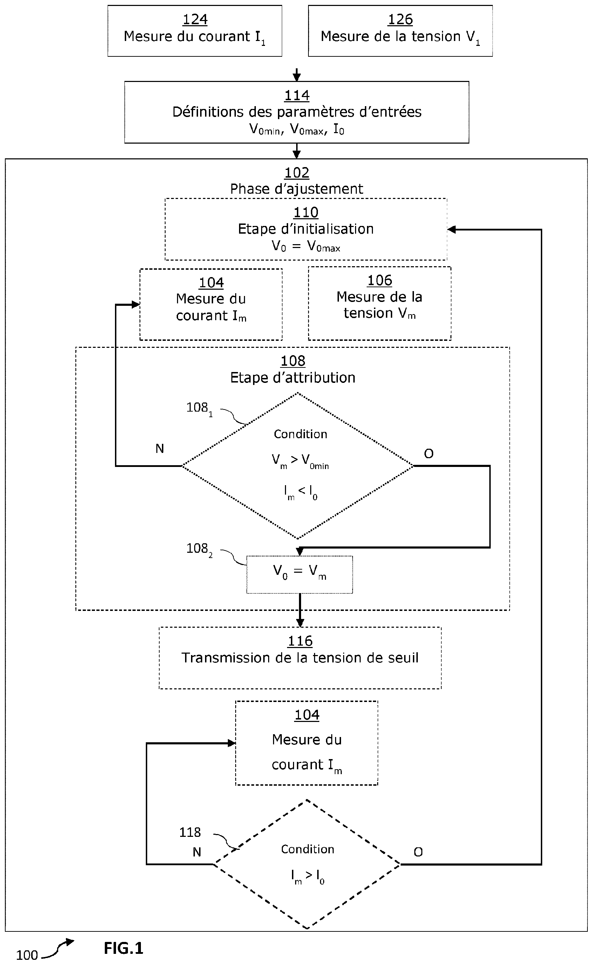

En outre, l'élément N sur la FIGURE 1 illustre le fait qu'une condition n'est pas atteinte et/ou satisfaite.

L'élément O sur la FIGURE 1 illustre le fait qu'une condition est atteinte et/ou satisfaite.

Dans la présente description, le terme tension à vide correspond à une tension mesurée sans traction. Par exemple, le terme tension à vide de la sous-station correspond à une tension mesurée de la sous-station lorsqu'il n'y a pas de train qui consomme ou produit de l'énergie.

La FIGURE 1 est une représentation schématique non limitative d'un exemple de réalisation non limitatif d'un procédé selon l'invention.

Le procédé 100, représenté sur la FIGURE 1, s'applique à un onduleur réversible contrôlé en droop de tension et associé à une sous-station alimentant une section de voie ferrée. Dans le cas du procédé 100, l'onduleur est utilisé pour la récupération d'énergie de freinage au sein de la section à laquelle l'onduleur est relié. La récupération de l'énergie de freinage par l'onduleur se déclenche à partir d'une tension V₀, dite tension de seuil V₀.

Pour cela, le procédé 100 comprend une première étape amont :
- d'une mesure 126 de la tension V₁ à vide de la sous-station pendant une durée prédéterminée,
- d'une mesure 124 du courant I₁ fourni par la sous-station pendant une durée prédéterminée.

L'étape amont de la mesure 126 de la tension V₁ à vide de la sous-station correspond à un enregistrement de mesures de la tension à vide V₁ de la sous-station pendant une durée assez longue, par exemple une semaine.

La tension V₁ mesurée est une tension continue DC.

L'étape amont de la mesure 124 du courant I₁ à vide fourni par la sous-station correspond à un enregistrement de mesures du courant à vide I₁ de la sous-station pendant une durée assez longue, par exemple une semaine.

Les étapes de mesures 124, 126 permettent de choisir un intervalle de variation de la tension de seuil V₀.

L'étape de mesure 126 de la tension à vide V₁ de la sous-station est réalisée du côté où la sous-station est alimentée en tension continue DC.

Dans une variante du procédé 100, non illustrée, la mesure de la tension à vide de la sous-station peut être réalisée du côté où la sous-station est alimentée par le réseau électrique alternatif AC haute tension, par exemple en amont d'un transformateur 63 kV (kilovolt) connecté à la sous-station et agencé pour alimenter la sous-station en haute tension alternative AC. Dans cette configuration, le procédé 100 comprend une mesure d'une tension à vide alternative en haute tension (étape non illustrée). Cet enregistrement de mesures de tensions alternatives est ensuite converti par l'onduleur en tension continue DC pour ensuite être utilisée par le procédé 100 pour déterminer la tension de seuil V₀.

Dans le cas du procédé 100 illustré en FIGURE 1, la mesure de la tension à vide V₁ de la sous-station est réalisée du coté où la sous-station est alimentée en tension continue DC.

Le procédé 100 comprend ensuite une étape 114, appelée étape préalable 114, dans laquelle des paramètres d'entrée sont définis. Ces paramètres d'entrées peuvent comprendre une tension minimale à vide V₀ₘᵢₙ, une tension maximale à vide V₀ₘₐₓ et un courant de seuil à vide I₀ prédéfini pour la sous-station.

Le courant de seuil I₀ correspond typiquement à une valeur de courant pour laquelle la tension de la sous-station est considérée comme une tension à vide si un courant fourni par la sous-station est inférieur à ce seuil I₀.

Les tensions minimale V₀ₘᵢₙ et maximale V₀ₘₐₓ correspondent, pour la première, à une tension continue DC à vide minimale de la sous-station à laquelle l'onduleur est associé et/ou relié et, respectivement pour la seconde, à une tension continue DC maximale à vide de la sous-station. Ces variations de tension continues DC, tension minimale V₀ₘᵢₙ et tension maximale V₀ₘₐₓ , sont liées à des variations de la tension du réseau haute tension alimentant la sous-section. Les tensions minimale V₀ₘᵢₙ et maximale V₀ₘₐₓ sont définies par rapport à la tension de seuil V₀, correspondant la tension à vide V₀ réelle de la sous-station à un instant donné. Ainsi, les tensions minimale V₀ₘᵢₙ et maximale V₀ₘₐₓ représentent l'intervalle des variations de la tension seuil V₀ qui ne peut être inférieure à la tension minimale V₀ₘᵢₙ et supérieure à la tension maximale V₀ₘₐₓ. Par exemple, les tensions maximale V₀ₘₐₓ et minimale V₀ₘᵢₙ sont égales à, respectivement, +/- 5 V par rapport à la tension de seuil V₀ à un instant donné.

Les étapes de mesure 124, 126 du courant I₁ et de la tension V₁ réalisées en amont permettent de définir les paramètres V₀ₘᵢₙ, V₀ₘₐₓ et I₀.

La définition des paramètres d'entrée V₀ₘᵢₙ, V₀ₘₐₓ et I₀ est réalisée manuellement par un opérateur et/ou automatiquement. Dans le cas considéré, l'entrée des paramètres V₀ₘᵢₙ, V₀ₘₐₓ et I₀ est réalisée manuellement par un opérateur.

La tension minimale V₀ₘᵢₙ correspond à la valeur minimale de tension à vide enregistrée pendant l'étape amont 126 de mesure de tension V₁ de la sous-station.

La tension maximale V₀ₘₐₓ correspond à la valeur maximale de tension à vide enregistrée pendant l'étape amont 126 de mesure de tension V₁ de la sous-station.

La valeur du courant de seuil I₀ est quant à lui déterminé selon plusieurs paramètres, qui peuvent être :
- la qualité de la mesure du courant fourni par la sous-station,
- une dynamique du système de récupération de l'énergie de freinage et une dynamique du procédé 100 concernant une estimation de la tension de seuil V₀.

La valeur du courant de seuil I₀ est choisi de manière à permettre au système de récupération de l'énergie de freinage et au procédé selon l'invention de réagir lors ce qu'une chute de courant apparait dans une phase de pré-freinage d'un train. Au d'autres termes cela confère, au système de récupération de l'énergie de freinage et au procédé selon l'invention, un temps de battement avant de réagir.

Quand les paramètres d'entrée V₀ₘᵢₙ, V₀ₘₐₓ et I₀ sont déclarés dans l'étape préalable 114, le procédé comprend au moins une itération d'une phase d'ajustement 102 de la valeur de la tension de seuil V₀ de l'onduleur.

La phase d'ajustement 102 comprend tout d'abord une étape d'initialisation 110 dans laquelle le procédé 100 initialise la tension seuil V₀ et lui attribue la valeur de la tension maximale V₀ₘₐₓ prédéfinie à la phase préalable 114.

La phase d'ajustement 102 comprend ensuite :
- une étape de mesure 104 d'un courant Iₘ fourni par la sous-station à la section de voie ferrée, et
- une étape de mesure 106 d'une tension Vₘ fournie par la sous-station à la section de voie ferrée.

L'étape de mesure 106 de la tension Vₘ fournie par la sous-station et l'étape de mesure du courant fourni par la sous-station sont opérées (i.e. effectuée) de manière permanente dès le début du procédé 100 selon l'invention, c'est-à-dire par des prises de mesures continues (i.e. ininterrompues) de la tension Vₘ et du courant Iₘ pendant toute la durée du procédé 100.

La tension mesurée Vₘ est une tension continue DC à vide fournie par la sous-station.

Le courant mesuré Iₘ est à un courant à vide fourni par la sous-station.

Les étapes de mesure 104, 106 et 112 sont réalisées simultanément ou de manière décalée.

L'étape de mesure 104 du courant Iₘ est réalisée avec un capteur de courant, par exemple une pince ampérométrique, ou boucle inductive.

La phase d'ajustement 102 comprend ensuite une étape 108 d'attribution de la tension mesurée Vₘ à la tension de seuil V₀.

L'étape d'attribution 108 comprend une vérification d'une condition de modification 108₁ de la tension de seuil V₀. Cette condition 108₁ est réalisée lorsque :
- le courant Iₘ fourni par la sous-station est strictement inférieur au courant seuil I₀, et
- la tension Vₘ de la sous-station est strictement supérieure à la tension minimale V₀ₘᵢₙ.

Si la condition 108₁ n'est pas réalisée ou satisfaite, le procédé reprend aux étapes de mesure 104, 106, 112.

Si la condition 108₁ est satisfaite, le procédé 100 réalise une attribution 108₂. L'attribution 108₂ est configurée pour attribuer la valeur de la tension Vₘ mesurée à la tension de seuil de l'onduleur V₀. La tension de seuil V₀ est donc égale à la tension Vₘ mesurée.

La condition 108₁ est typiquement satisfaite lors d'une absence de passage d'un ou plusieurs véhicules et/ou lors d'un freinage d'un ou plusieurs véhicules dans la section de voie ferrée considérée.

La phase d'ajustement 102 du procédé 100 comprend ensuite une étape de transmission 116 de la tension de seuil V₀ à un contrôleur de l'onduleur fonctionnant en droop de tension.

L'étape de transmission 116 peut être réalisée de manière filaire ou sans fil.

Ainsi, après l'étape d'attribution 108 et/ou de transmission 116, si l'énergie de freinage produite par un ou des véhicule(s) ferroviaire(s), présent(s) sur la section de voie ferrée concernée, produisent une énergie de freinage supérieure à la tension de seuil V₀ et que cette énergie de freinage n'est pas consommée par d'autres trains, alors le contrôleur de l'onduleur réversible active l'onduleur en mode de conversion d'énergie continue DC, l'énergie de freinage, en énergie alternative AC. Il y a ainsi un flux de cette énergie convertie vers le réseau alternatif alimentant la sous-section. L'énergie de freinage est donc recyclée et réutilisée, ce qui permet des économies d'énergie.

Lors du procédé 100, la valeur de la tension de seuil V₀, précédemment attribuée à l'étape d'attribution 108, reste inchangée tout au long de la phase de freinage d'un ou des véhicules ferroviaires et tant que le courant fourni par la sous-station Iₘ est et/ou reste strictement inférieur au courant de seuil I₀.

Ainsi, une nouvelle itération de la phase d'ajustement 102 n'est pas réalisée tant le courant Iₘ fourni par la sous-station est et/ou reste strictement inférieur au courant de seuil I₀. Cette condition est testée lors d'une étape 118 appelée condition d'itération 118.

Si le courant mesuré Iₘ n'est pas strictement supérieur au courant de seuil I₀, alors la phase d'attribution 102 ne peut passer à l'itération suivante. Dans ce cas, la tension de seuil V₀ choisie à l'étape d'attribution 108 reste inchangée. Le procédé 100 ne peut aller plus loin et réitère l'étape de mesure 114 du courant Iₘ fourni par la sous-station jusqu'à ce que le courant mesuré Iₘ fourni par la sous-station soit strictement supérieur au courant de seuil I₀.

Si le courant mesuré Iₘ est strictement supérieur au courant de seuil I₀, alors la condition d'itération 118 est satisfaite. La phase d'attribution 102 passe à l'itération suivante.

Le courant Iₘ mesuré devient typiquement supérieur à I₀, lorsque, par exemple, il y a un passage d'un nouveau véhicule.

Lorsque la condition d'itération 118 est satisfaite alors le procédé 100 passe à une nouvelle itération de la phase d'ajustement 102 débutant par l'étape d'initialisation 110 de la tension de seuil V₀.

L'étape d'initialisation 110 réinitialise donc la valeur de la tension seuil V₀ de l'onduleur et lui attribue la valeur de tension maximale V₀ₘₐₓ.

Dans le cas de l'étape d'initialisation 110 de cette nouvelle itération de la phase d'ajustement 102, deux cas de figure sont possibles :
- soit, lors d'une nouvelle itération de la phase d'ajustement 102, la valeur de la tension maximale V₀ₘₐₓ utilisée à l'étape d'initialisation 110 est choisie comme étant la valeur de la tension maximale V₀ₘₐₓ obtenue lors de la précédente itération. Ainsi, en partant de la tension de seuil V₀ obtenue à l'étape d'attribution 108 de l'itération précédente (de la phase d'ajustement 102), le procédé 100 recalcule la valeur de la tension maximale V₀ₘₐₓ et initialise cette valeur comme étant égale à la tension de seuil V₀ déclarée à l'étape d'initialisation de cette nouvelle itération. Dans ce cas, la valeur de la tension de seuil V₀ initialisée à l'étape d'initialisation 110 peut varier d'une itération de la phase d'ajustement 102 à une autre, ou
- soit, lors d'une nouvelle itération de la phase d'ajustement 102, la valeur de la tension maximale V₀ₘₐₓ utilisée lors de l'étape d'initialisation 110 est choisie comme étant la valeur de la tension maximale V₀ₘₐₓ utilisée lors de l'étape d'initialisation 110 de la première itération de la phase d'ajustement 102. Ainsi, dans ce cas-ci, la valeur de la tension de seuil V₀ initialisée à l'étape d'initialisation 110 est constante (i.e. reste inchangée) d'une itération de la phase d'ajustement 102 à une autre.

Les deux points énoncés précédemment peuvent être définis avant le début de la mise en oeuvre du procédé 100. Plus particulièrement, ce choix est modifiable au cours du procédé 100.

Ainsi, le procédé 100 adapte la valeur tension de seuil V₀ de l'onduleur en fonction du courant Iₘ et de la tension Vₘ mesurés à un instant donné. Le procédé 100 réalise donc une modification de la tension de seuil V₀ de manière dynamique en ayant une connaissance plus fine de l'environnement à lequel l'onduleur est relié.

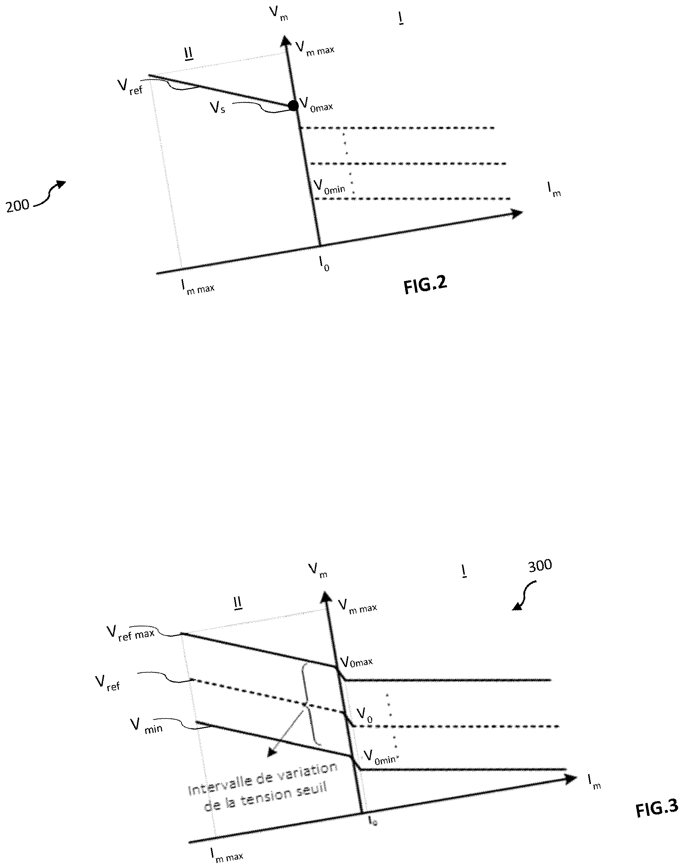

On va maintenant décrire à l'aide des FIGURE 2 et 3, une caractéristique 200 de droop d'un onduleur réversible à IGBT selon l'état de l'art et respectivement une caractéristique 300 de droop d'un onduleur réversible à IGBT selon l'invention.

La variation de courant Iₘ fourni par la sous-station est positionnée sur l'axe des abscisses et la variation de tension Vₘ fournie par la sous-station est positionnée sur l'axe des ordonnées.

Ces caractéristiques 200 et 300 illustrent deux parties distinctes du mode de fonctionnement d'un onduleur réversible à IGBT contrôlé en droop de tension.

La partie des caractéristiques 200 et 300 positionnée à droite de l'axe des ordonnées, soit pour des courants Iₘ positifs, illustre un mode où l'onduleur réversible à IGBT fonctionne en mode redresseur I, c'est à dire que l'onduleur réalise une conversion de puissance alternative en continue AC/DC. Il y a donc conversion de tension alternative AC en tension continue DC.

La partie des caractéristiques 200 et 300 positionnée à gauche de l'axe des ordonnées, soit pour des courants Iₘ négatifs, illustre un mode où l'onduleur réversible à IGBT fonctionne en mode onduleur II, c'est à dire que l'onduleur réalise une conversion de puissance continue en alternative DC/AC. Il y a donc conversion de tension continue DC en tension alternative AC. C'est le cas, par exemple, de la récupération de l'énergie de freinage pour alimenter le réseau électrique alternatif haute tension.

Pour les deux caractéristiques 200 et 300 de l'onduleur réversible à IGBT, la variation en tension de l'onduleur réversible à IGBT suit une variation linéaire.

Cette variation linéaire est appelée tension de référence V_{ref} et est définie par une pente 1/k_{droop}, avec k_{droop} représentant le coefficient de droop. La variation en tension de l'onduleur est linéaire de part et d'autre de l'axe des ordonnées des caractéristiques 200 et 300, elle est donc linéaire d'un mode à l'autre, soit lors du mode redresseur I et lors du mode onduleur II.

Sur les caractéristiques 200 et 300, sont tracées les variations de tension de l'onduleur fonctionnant pour des tensions maximales probables Vₘₐₓ et minimales probables Vₘᵢₙ de la sous-station. Ces variations comprennent des points de fonctionnement caractéristiques représentant la tension continue DC maximale probable à vide V₀ₘₐₓ et minimale probable à vide V₀ₘᵢₙ à vide de la sous-station lorsque la sous-station comprend un courant de seuil I₀.

La variation de la tension du fonctionnement de l'onduleur en mode redresseur I et en mode onduleur II est reliée par un seuil de droop, Vₛ, déclenchant :
- le mode onduleur II de l'onduleur réversible à IGBT, si la tension à ses bornes Vₘ est supérieure au seuil de droop Vₛ, et
- le mode redresseur I de l'onduleur réversible à IGBT, si la tension à ses bornes Vₘ est inférieure au seuil de droop.

Pour la caractéristique 200, seule la variation de tension dans le mode onduleur II est tracée.

En effet, cela est dû au fait que pour la caractéristique 200, le seuil de déclenchement Vₛ est fixe et est prédéfini par des constructeurs.

Le seuil de déclenchement Vₛ est fixé par rapport à la tension continue à vide V₀ de la sous-station. Ainsi, le mode onduleur II ne prend pas en compte la variation de tension évoluant dans le mode redresseur II.

La tension de seuil Vₛ est positionnée sur l'axe des ordonnées soit positionnée au niveau du courant à vide I₀ et est supérieure à la tension à vide maximale V₀ₘₐₓ. La tension à vide maximale V₀ₘₐₓ correspond à tension continue DC maximale probable à vide de la sous-station. Ainsi, le seuil de déclenchement Vₛ est donc strictement supérieur à la tension maximale V₀ₘₐₓ, ce qui permet d'éviter un rebouclage du courant, soit un courant parasite, entre le redresseur et l'onduleur. Toutefois, l'écart entre le seuil de déclenchement Vₛ et la tension maximale V₀ₘₐₓ illustre qu'il y a une perte de récupération d'énergie de freinage pour les cas d'une tension à vide V₀ basse.

La caractéristique 300 est obtenue par le procédé 100 de commande d'un onduleur réversible, contrôlé en droop.

La caractéristique 300 prend en compte la variation de tension en mode redresseur II.

Pour la caractéristique 300, soit la caractéristique illustrant le fonctionnement d'un onduleur selon le procédé 100, la pente de la variation linéaire entre le mode redresseur I et le mode onduleur II est la même.

Dans le cas du procédé 100 de commande d'un onduleur réversible, contrôlé en droop, le seuil de déclenchement Vₛ est ajusté en fonction de la tension à vide V₀ actuelle de le sous-station. Le seuil de déclenchement Vₛ dans la caractéristique 400 est égale à la tension de seuil V₀ ajustée à la phase d'ajustement 102. Ainsi, suivant le procédé 100, la tension de référence V_{ref} varie en fonction de la tension de seuil V₀ (i.e. tension à vide de la sous-station), variant elle-même en fonction de la tension Vₘ fournie par la sous-station. Le procédé 100 est agencé pour mettre à jour la valeur de la tension de référence V_{ref} du contrôle en droop en ajustant la valeur de la tension de seuil V₀.

Plus précisément, la modification de la tension de seuil V₀ modifie la référence de puissance active de l'onduleur, ce qui conduit à une modification de la tension continue DC V_{ref} de l'onduleur

La tension de seuil V₀ est bornée par les tensions maximale V₀ₘₐₓ et minimale V₀ₘᵢₙ, la tension V_{ref} est elle-même bornée par une tension maximale de référence V_{ref} max et minimale de référence V_{ref min}.

Les tensions V_{ref max} et V_{ref min} varient en fonction des tensions maximale V₀ₘₐₓ et minimale V₀ₘᵢₙ entrées à la phase préalable 114 du procédé 100.

La pente de la caractéristique de droop V_{ref} dans la caractéristique 400 est toujours constante (car imposée par le fabriquant) mais le seuil de droop, ici V₀, est modifiable pour suivre les variations de la tension à vide V₀ de la sous-station.

Ainsi, suivant le procédé 100, :
- le seuil de déclenchement V₀ est modifiable et s'adapte en fonction des variations Vₘ en tension de la sous-station,
- la variation linéaire de la pente de la tension V_{ref} est linéaire et conserve le même coefficient droop k_{droop}.

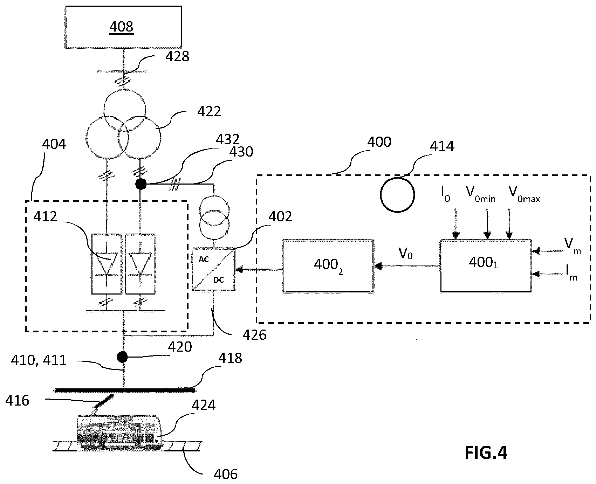

La FIGURE 4 est une représentation schématique d'un exemple de réalisation non limitatif d'un dispositif 400 selon l'invention relié à une sous-section 404 de voie ferrée 406.

Une liaison en tension 428 lie le réseau électrique 408 haute tension à la sous-station 404. La liaison en tension 428 alimente la sous-station 404 avec une tension alternative AC fournie le réseau électrique haute tension 408.

Un transformateur 422 est positionné sur la liaison en tension 428. Le transformateur est positionné entre le réseau électrique 408 haute tension et la sous-station 404.

Le transformateur 422 est par exemple un transformateur de 63 kV (kilovolt) connecté à la sous-station 404.

L'onduleur 402 est relié au réseau électrique 408 haute tension AC par un câble de liaison 430 qui est connecté à la liaison en tension 428 au niveau d'un noeud 432.

Le noeud 432 est positionné sur la liaison haute tension 428 entre le transformateur 422 et la sous-station 404.

Le dispositif 400 de commande d'un onduleur réversible 402 est prévu pour être positionné dans une sous-station 404 alimentant une section de voie ferrée 406. La sous-section 406 de voie ferrée comprend un onduleur réversible 402 contrôlé en droop de tension par le dispositif 400 agencé pour récupérer de l'énergie de freinage au sein de la section de voie ferrée 406. La récupération d'énergie de freinage est déclenchée au-delà de la tension de seuil V₀, bornée par la tension minimale V₀ₘᵢₙ et la tension maximale V₀ₘₐₓ.

Le dispositif 400 comprend un module d'estimation 400₁ relié à un contrôleur 400₂ en droop de tension de l'onduleur 402.

Pour ajuster la tension de seuil V₀ suivant le procédé 100 présenté aux précédentes FIGURES, le dispositif 400 comprend un premier moyen de mesure (non illustré) agencé pour mesurer le courant Iₘ fourni par la sous-station 404.

Le moyen premier moyen de mesure comprend un capteur de courant. Le capteur de courant peut être, par exemple, une pince ampérométrique, et/ou une boucle inductive.

Le courant Iₘ est mesuré au niveau d'un point 420 positionné sur un câble de liaison 410 reliant une caténaire 418 avec l'onduleur 402 et un redresseur à diodes 412 positionné dans la sous-station 404.

Le dispositif 400 comprend en outre un second moyen de mesure (non illustré) agencé pour mesurer la tension Vₘ fournie par la sous-station 404.

La tension Vₘ est une tension continue DC à vide. La tension Vₘ est mesurée au niveau d'une connexion 411 en tension entre la sous-station 404 et la caténaire 418. La connexion 411 en tension alimente la caténaire 418 avec la tension continue fournie sous-station 404.

Sur la FIGURE 4, le câble de liaison 410 et la liaison 411 sont confondus.

La tension Vₘ est mesurée au niveau du point 420 positionné sur la connexion 411.

Dans une variante de dispositif 400, le dispositif 400 comprend un troisième moyen de mesure (non illustré) agencé pour mesurer une tension Vₕₜ (non illustrée) du réseau électrique 408 haute tension fournie à la sous-station 404.

La tension Vₕₜ est une tension alternative AC représentative d'une tension alternative AC à vide de la sous-station 404.

La tension Vₕₜ est mesurée sur la liaison haute tension 428, en amont du transformateur 422, c'est à dire entre le réseau électrique haute tension 408 et le transformateur 422.

Le second moyen de mesure et le troisième moyen de mesure comprennent chacun un capteur de tension.

La tension continue DC à vide V₁ est mesurée au niveau du point 420, soit au même endroit que la mesure de la tension Vₘ.

Le courant I₁ à vide est mesuré au niveau du point 420, soit au même endroit que la mesure de courant Iₘ.

L'enregistrement des mesures de la tension V₁ permet de définir la tension minimale V₀ₘᵢₙ et la tension maximale V₀ₘₐₓ.

Dans une variante de dispositif 400, la tension Vₕₜ est convertie par l'onduleur 402. Cette tension convertie peut être utilisée pour définir la tension minimale V₀ₘᵢₙ et la tension maximale V₀ₘₐₓ.

L'enregistrement du courant I₁ permet de définir le courant de seuil I₀.

La sous-station 404 comprend les redresseurs à diode 412 agencés pour convertir la tension alternative AC fournie par le réseau électrique 408 haute tension à la sous-station 404.

Un train 424 circule sur la section de voie ferrée 406. Le train 424 est alimenté par un pantographe 416 reliant la caténaire 418 au train 424. La caténaire 418 est alimentée avec la tension continue DC fournie sous-station 404 par la connexion 411.

A un instant donné, le train 424 freine, par exemple à un arrêt au niveau d'une gare (non illustrée). De cette manière, de l'énergie mécanique de freinage est convertie en énergie électrique, par exemple en une tension continue DC. Cette énergie de freinage convertie est injectée sur la ligne d'alimentation du train 424, c'est-à-dire qu'elle repasse par le pantographe 416 et la caténaire 418. L'énergie de freinage convertie provenant du train 424 circule ensuite en passant par la connexion 411 et par un fil 426 reliant l'onduleur 402 à la caténaire 418 par l'intermédiaire de la connexion 411.

L'onduleur 402 est relié au réseau électrique 408 haute tension par le câble liaison 430. Ainsi, si les conditions 108₁ de l'étape d'attribution 108 sont remplies, l'énergie de freinage produite par le train 424 (convertie en énergie électrique continue DC) est convertie par l'onduleur 402 en une tension alternative AC. Cette tension alternative AC est transmise au réseau électrique 408 haute tension par le câble de connexion 430 relié à la liaison en tension 428.

Les mesures du courant Iₘ et de la tension Vₘ fournis par la sous-station 404 sont entrées et/ou envoyées à l'entrée du module d'estimation 400₁ du dispositif 400.

Le module d'estimation 400₁ nécessite aussi la définition des paramètres d'entrée V₀ₘᵢₙ, V₀ₘₐₓ, I₀ définis à l'étape préalable 114 du procédé 100.

Pour mettre en oeuvre la combinaison des étapes mises en oeuvre par le procédé 100, le dispositif 400 comprend un processeur et/ou une carte de calcul numérique (non illustrés) agencés pour exécuter un algorithme d'estimation de la tension de seuil. L'algorithme de la tension de seuil est programmé pour mettre en oeuvre les étapes du procédé 100.

A chaque itération de la phase d'ajustement 102, le module d'estimation 400₁ est agencé pour transmettre au contrôleur de l'onduleur 400₂ la tension de seuil V₀ ajustée par l'algorithme d'estimation du module d'estimation 400₁.

Ainsi, le module d'estimation 400₁ comprend, en entrée, la tension Vₘ et le courant Iₘ mesurés, l'intervalle de variation de la tension à vide de la sous-station 404 en déclarant la tension minimale V₀ₘᵢₙ et V₀ₘₐₓ, et le courant de seuil I₀.

Pour réaliser l'étape de transmission 116, le dispositif 400 comprend au moins un port de connexion agencé pour connecter ledit dispositif 400 avec le contrôleur 400₂ de l'onduleur 402 réversible fonctionnant en droop.

Le dispositif 400, comprend en outre des moyens de communications 414 agencés pour communiquer des données avec un serveur distant (non illustré).

Les données peuvent comprendre le courant Iₘ et la tension Vₘ mesurés, et/ou la tension de seuil V₀ transmise à l'étape de transmission 116.

Les moyens de communications 414 peuvent comprendre un dispositif 3G sans fil et/ou une antenne radiofréquence.

Le dispositif 400 peut comprendre des moyens de communication (non illustrés) agencés pour connecter ledit dispositif à un bus de type Controller Area Network (CAN) et/ou à des dispositifs ayant des entrées et/ou sorties analogiques et numériques.

Le dispositif 400 comprend en outre un pupitre (non illustré) agencé pour contrôler et/ou afficher le fonctionnement du dispositif 400 et/ou les différentes données d'entrées et de sortie du dispositif 400 à un utilisateur.

Dans une variante de dispositif 400, l'onduleur réversible 402 contrôlé en droop comprend au moins un dispositif 400. L'onduleur 402 et le module d'estimation 400₁ et le contrôleur 400₂ en droop de tension peuvent donc être assemblés en un seul et même dispositif (i.e. élément).

Bien entendu, l'invention n'est pas limitée aux exemples qui viennent d'être décrits. De nombreuses modifications peuvent être apportées à ces exemples sans sortir du cadre de la présente invention telle que décrite. l'invention étant décrite par les revendications indépendantes.

## Revendications

1. Procédé (100) de commande d'un onduleur (402) réversible associé à une sous-station (404) alimentant une section de voie ferrée (406), ledit onduleur (402) réversible étant utilisé pour une récupération d'énergie au freinage au sein de ladite section (406), déclenchée au-delà d'une tension (V₀), dite tension de seuil, bornée par une tension minimale (V₀ₘᵢₙ) et une tension maximale (V₀ₘₐₓ) définies par rapport à ladite tension de seuil (V₀) **caractérisé en ce que** l'onduleur (402) est contrôlé en droop et **en ce que** ledit procédé comprenant au moins une itération d'une phase d'ajustement (102) de ladite tension seuil (V₀) dudit onduleur et comprenant les étapes suivantes :
- mesure (104) d'un courant (Iₘ) fourni par ladite sous-station (404) à ladite section de voie ferrée (406);
- mesure (106) d'une tension continue (Vₘ) fournie par la sous-station (404) à ladite section de voie ferrée (406);
- attribution (108) de la valeur mesurée de ladite tension continue (Vₘ) à ladite tension seuil (V₀) lorsque :
• le courant mesuré (Iₘ) est strictement inférieur à une valeur de courant (I₀)prédéfinie pour ladite sous-station (404), appelée courant de seuil, et correspondant à une tension à vide de ladite sous-station (404), et
• ladite tension continue (Vₘ) est strictement supérieure au seuil minimal (V₀ₘᵢₙ).

2. Procédé (100) selon la revendication 1, **caractérisé en ce que** la phase d'ajustement (102) comprend, une étape d'initialisation (110) dans laquelle la tension de seuil (V₀) est définie égale à la tension maximale (V₀ₘₐₓ).

3. Procédé (100) selon la revendication précédente, **caractérisé en ce que**, lors d'une nouvelle itération, la valeur de la tension maximale (V₀ₘₐₓ) utilisée lors de l'étape d'initialisation (110) est choisie comme étant la valeur de la tension maximale (V₀ₘₐₓ) obtenue lors de la précédente itération, ladite valeur de tension maximale étant recalculée lors de la précédente itération en fonction de la valeur de la tension seuil (V₀) obtenue à l'étape d'attribution (108).

4. Procédé (100) selon la revendication 2, **caractérisé en ce que**, lors d'une nouvelle itération, la valeur de la tension maximale (V₀ₘₐₓ) utilisée lors de l'étape d'initialisation (110) est choisie comme étant la valeur de la tension maximale (V₀ₘₐₓ) utilisée lors de l'étape d'initialisation (110) de la première itération.

5. Procédé (100) selon l'une quelconque des revendications précédentes, **caractérisé en ce qu'**il comprend, avant la première itération de la phase d'ajustement, :
- une étape de mesure (126), pendant une durée prédéterminée, d'une tension continue (V₁) fournie par la sous-station (404) à ladite section de voie ferrée (406), et
- une étape de mesure (124), pendant une durée prédéterminée, d'un courant continu (I₁) fourni par ladite sous-station (404) à ladite section de voie ferrée (406).

6. Procédé (100) selon la revendication précédente, **caractérisé en ce qu'**il comprend une étape préalable (114), réalisée avant la première itération de la phase d'ajustement (102), et lors de laquelle les valeurs de la tension minimale (V₀ₘᵢₙ), de la tension maximale (V₀ₘₐₓ), et du courant de seuil (I₀), sont définies.

7. Procédé (100) selon l'une quelconque des revendications précédentes, **caractérisé en ce qu'**il comprend, après l'étape d'attribution (102), une étape de transmission (116) de la valeur de la tension de seuil (V₀) ajustée à l'étape d'attribution, à l'onduleur réversible (402).

8. Procédé (100) la revendication précédente, caractérisé en que la phase d'ajustement est réitérée lorsque le courant de seuil (I₀)est strictement inférieur au courant mesuré (Iₘ) fourni par la sous-station.

9. Dispositif (400) de commande d'un onduleur (402) réversible, contrôlé en droop, associé à une sous-station (404) alimentant une section de voie ferrée (406), ledit onduleur (402) étant utilisé pour une récupération de l'énergie au freinage au sein de ladite section (406), déclenchée au-delà d'une tension (V₀), dite tension de seuil (V₀), bornée par une tension minimale (V₀ₘᵢₙ) et une tension maximale (V₀ₘₐₓ) définies par rapport à ladite tension de seuil (V₀), ledit dispositif (400) comprenant :
- un premier moyen de mesure agencé pour fournir une mesure du courant (Iₘ) fourni par ladite section de voie ferrée (406),
- un second moyen de mesure agencé pour fournir une mesure de la tension continue (Vₘ) fournie par la sous-station (404) à ladite section de voie ferrée (406), et
- au moins un module de calcul (400₁);
agencés pour mettre en oeuvre un procédé (100) selon l'une quelconque des revendications précédentes.

10. Dispositif (400) selon la revendication précédente, **caractérisé en ce qu'**il comprend en outre un troisième moyen de mesure agencé pour fournir une mesure de la tension continue (Vₕₜ) du réseau électrique (408) haute tension à ladite sous-station (404).

11. Dispositif (400) selon l'une quelconque des revendications 9 ou 10, **caractérisé en ce qu'**il comprend en outre au moins un port de connexion agencé pour connecter ledit dispositif (400) avec au moins un contrôleur (400₂) d'onduleur (402) réversible fonctionnant en droop.

12. Onduleur réversible (402), contrôlé en droop, comprenant au moins un dispositif (400) selon l'une quelconque des revendications 9-11.

## Patentansprüche

1. Verfahren (100) zum Steuern eines reversiblen Wechselrichters (402), der einem Unterwerk (404) zugeordnet ist, die einen Schienenwegabschnitt (406) versorgt, wobei der reversible Wechselrichter (402) für eine Energierückgewinnung während des Bremsens innerhalb des Abschnitts (406) verwendet wird, die oberhalb einer Spannung (V₀), der Schwellenspannung, begrenzt durch eine Mindestspannung (V₀ₘᵢₙ) und eine Höchstspannung (V₀ₘₐₓ), die in Bezug auf die Schwellenspannung (V₀) definiert sind, ausgelöst wird, **dadurch gekennzeichnet, dass** der Wechselrichter (402) in Droop gesteuert wird und **dadurch, dass** das Verfahren mindestens eine Iteration einer Anpassungsphase (102) der Schwellenspannung (V₀) des Wechselrichters umfasst und die folgenden Schritte umfasst:
- Messung (104) eines Stroms (Iₘ), der von dem Unterwerk (404) an den Schienenwegabschnitt (406) geliefert wird;
- Messung (106) einer Gleichspannung (Vₘ), die von dem Unterwerk (404) an den Schienenwegabschnitt (406) geliefert wird;
- Zuordnung (108) des gemessenen Werts der Gleichspannung (Vₘ) zu der Schwellenspannung (V₀), wenn:
• der gemessene Strom (Iₘ) deutlich niedriger ist als ein für das Unterwerk (404) vordefinierter Stromwert (I₀), der Schwellenstrom genannt wird, und einer Leerlaufgleichspannung des Unterwerks (404) entspricht, und
• die Gleichspannung (Vₘ) deutlich größer als die Mindestschwelle (Vamin) ist.

2. Verfahren (100) nach Anspruch 1, **dadurch gekennzeichnet, dass** die Anpassungsphase (102) einen Initialisierungsschritt (110) umfasst, in dem die Schwellenspannung (V₀) gleich der Höchstspannung (V₀ₘₐₓ) definiert ist.

3. Verfahren (100) nach dem vorstehenden Anspruch,
**dadurch gekennzeichnet, dass** während einer neuen Iteration der während des Initialisierungsschritts (110) verwendete Wert der Höchstspannung (V₀ₘₐₓ) als der Wert der erhaltenen Höchstspannung (V₀ₘₐₓ) gewählt wird, die während der vorherigen Iteration erhalten wurde, wobei der maximale Spannungswert während der vorherigen Iteration in Abhängigkeit des Werts der Schwellenspannung (V₀), die im Zuordnungsschritt (108) erhalten wurde, neu berechnet wird.

4. Verfahren (100) nach Anspruch 2, **dadurch gekennzeichnet, dass** während einer neuen Iteration der Wert der während des Initialisierungsschritts (110) verwendeten Maximalspannung (V₀ₘₐₓ) als der Wert der verwendeten Höchstspannung (V₀ₘₐₓ) gewählt wird, die während des Initialisierungsschritts (110) der ersten Iteration verwendet wurde.

5. Verfahren (100) nach einem der vorstehenden Ansprüche,
**dadurch gekennzeichnet, dass** es vor der ersten Iteration der Anpassungsphase Folgendes umfasst:
- einen Schritt der Messung (126) einer Gleichspannung (V₁) in einem vorbestimmten Zeitraum, die von dem Unterwerk (404) an den Schienenwegabschnitt (406) geliefert wird, und
- einen Schritt der Messung (124) eines Gleichstroms (I₁) in einem vorbestimmten Zeitraum, der von dem Unterwerk (404) an den Schienenwegabschnitt (406) geliefert wird, und

6. Verfahren (100) nach dem vorstehenden Anspruch,
**dadurch gekennzeichnet, dass** es einen vorbereitenden Schritt (114) umfasst, der vor der ersten Iteration der Anpassungsphase (102) ausgeführt wird und währenddessen die Werte der Mindestspannung (V₀ₘᵢₙ), der Höchstspannung (V₀ₘₐₓ) und des Schwellenstroms (I₀) definiert werden.

7. Verfahren (100) nach einem der vorstehenden Ansprüche,
**dadurch gekennzeichnet, dass** es nach dem Zuordnungsschritt (102) einen Schritt zur Übertragung (116) des im Zuweisungsschritt angepassten Werts der Schwellenspannung (V₀) zum reversiblen Wechselrichter (402) umfasst.

8. Verfahren (100) nach dem vorstehenden Anspruch,
**dadurch gekennzeichnet, dass** die Anpassungsphase wiederholt wird, wenn der Schwellenstrom (I₀) kleiner ist als der von dem Unterwerk gelieferte gemessene Strom (Iₘ) ist.

9. Vorrichtung (400) zum Steuern eines in Droop gesteuerten reversiblen Wechselrichters (402), die einem Unterwerk (404) zugeordnet ist, die einen Schienenwegabschnitt (406) versorgt, wobei der Wechselrichter (402) zur Energierückgewinnung während des Bremsens innerhalb des Abschnitts (406) verwendet wird, die oberhalb einer Spannung (V₀), der Schwellenspannung (V₀), begrenzt durch eine Mindestspannung (V₀ₘᵢₙ) und eine Höchstspannung (V₀ₘₐₓ), die in Bezug auf die Schwellenspannung (V₀) definiert sind, ausgelöst wird, die Vorrichtung (400) umfassend:
- ein erstes Messmittel, das angeordnet ist, um eine Messung des Stroms (Iₘ) zu liefern, der von dem Schienenwegabschnitt (406) bereitgestellt wird,
- ein zweites Messmittel, das angeordnet ist, um eine Messung der Gleichspannung (Vₘ), die von dem Unterwerk (404) an den Schienenwegabschnitt (406) geliefert wird, bereitzustellen;
- mindestens ein Rechenmodul (400₁);
angeordnet, um ein Verfahren (100) nach einem der vorstehenden Ansprüche zu implementieren.

10. Vorrichtung (400) nach dem vorstehenden Anspruch,
**dadurch gekennzeichnet, dass** sie ferner ein drittes Messmittel umfasst, das angeordnet ist, um eine Messung der Gleichspannung (Vₕₜ) des elektrischen Hochspannungsnetzes (408) an das Unterwerk (404) zu liefern.

11. Vorrichtung (400) nach einem der Ansprüche 9 oder 10,
**dadurch gekennzeichnet, dass** sie ferner mindestens einen Verbindungsanschluss umfasst, der angeordnet ist, um die Vorrichtung (400) mit mindestens einer Steuerung (400₂) eines reversiblen Wechselrichters (402) in Droop zu verbinden.

12. Reversibler Wechselrichter (402), der in Droop gesteuert wird, umfassend mindestens eine Vorrichtung (400) nach einem der Ansprüche 9 bis 11.

## Claims

1. Method (100) for controlling a reversible inverter (402) associated with a substation (404) that powers a railway track section (406), said reversible inverter (402) being used for the recovery of braking energy within said section (406), which is triggered beyond a voltage (V₀), referred to as the threshold voltage and limited by a minimum voltage (V₀ₘᵢₙ) and a maximum voltage (V₀ₘₐₓ) which are defined with respect to said threshold voltage (V₀), **characterized in that** the inverter (402) is droop-controlled and **in that** said method comprises at least one iteration of a phase (102) for adjusting said threshold voltage (V₀) of said inverter and comprises the following steps:
- measuring (104) a current (Iₘ) provided by said substation (404) to said railway track section (406);
- measuring (106) a direct voltage (Vₘ) provided by the substation (404) to said railway track section (406);
- assigning (108) the measured value of said direct voltage (Vₘ) to said threshold voltage (V₀) when:
• the measured current (Iₘ) is strictly less than a current value (I₀)which is predefined for said substation (404), referred to as the threshold current, and corresponding to a no-load voltage of said substation (404), and
• said direct voltage (Vₘ) is strictly greater than the minimum threshold (V₀ₘᵢₙ).

2. Method (100) according to claim 1, **characterized in that** the adjustment phase (102) comprises an initialization step (110) in which the threshold voltage (V₀) is defined equal to the maximum voltage (V₀ₘₐₓ).

3. Method (100) according to the preceding claim, **characterized in that,** during a new iteration, the value of the maximum voltage (V₀ₘₐₓ) used in the initialization step (110) is chosen as being the value of the maximum voltage (V₀ₘₐₓ) obtained during the preceding iteration, said maximum voltage value being recalculated during the preceding iteration on the basis of the value of the threshold voltage (V₀) obtained in the assigning step (108).

4. Method (100) according to claim 2, **characterized in that,** during a new iteration, the value of the maximum voltage (V₀ₘₐₓ) used in the initialization step (110) is chosen as being the value of the maximum voltage (V₀ₘₐₓ) used in the initialization step (110) of the first iteration.

5. Method (100) according to any of the preceding claims,
**characterized in that** it comprises, before the first iteration of the adjustment phase:
- a step (126) of measuring, for a predetermined duration, a direct voltage (V₁) provided by the substation (404) to said railway track section (406), and
- a step (124) of measuring, for a predetermined duration, a direct current (I₁) provided by said substation (404) to said railway track section (406).

6. Method (100) according to the preceding claim, **characterized in that** it comprises a prior step (114), carried out before the first iteration of the adjustment phase (102), and during which the values of the minimum voltage (V₀ₘᵢₙ), the maximum voltage (V₀ₘₐₓ), and the threshold current (I₀), are defined.

7. Method (100) according to any of the preceding claims,
**characterized in that** it comprises, after the assigning step (102), a step (116) of transmitting the value of the threshold voltage (V₀), which is adjusted to the assigning step, to the reversible inverter (402).

8. Method (100) the preceding claim, **characterized in that** the adjustment phase is reiterated when the threshold current (I₀)is strictly less than the measured current (Iₘ) provided by the substation.

9. Device (400) for controlling a reversible inverter (402), which inverter is droop-controlled and associated with a substation (404) that powers a railway track section (406), said inverter (402) being used for the recovery of braking energy within said section (406), which is triggered beyond a voltage (V₀), referred to as the threshold voltage (V₀) and limited by a minimum voltage (V₀ₘᵢₙ) and a maximum voltage (V₀ₘₐₓ) which are defined with respect to said threshold voltage (V₀), said device (400) comprising:
- a first measurement means which provides a measurement of the current (Iₘ) provided by said railway track section (406),
- a second measurement means which provides a measurement of the direct voltage (Vₘ) provided by the substation (404) to said railway track section (406), and
- at least one calculation module (400₁);
which implement a method (100) according to any of the preceding claims.

10. Device (400) according to the preceding claim, **characterized in that** it further comprises a third measurement means which provides a measurement of the direct voltage (Vₕₜ) of the high voltage electrical network (408) to said substation (404).

11. Device (400) according to either claim 9 or claim 10, **characterized in that** it further comprises at least one connection port which connects said device (400) to at least one controller (400₂) of the reversible inverter (402) that operates by means of droop control.

12. Reversible inverter (402), which is droop-controlled and comprises at least one device (400) according to any of claims 9-11.
